(19) Europäisches Patentamt
European Patent Office
Office européen des brevets

(11) Publication number: **0 168 963**
**B1**

# (12) EUROPEAN PATENT SPECIFICATION

(45) Date of publication of patent specification: **27.12.89**

(51) Int. Cl.$^4$: **C 09 K 19/22**

(21) Application number: **85304222.4**

(22) Date of filing: **13.06.85**

## (54) Liquid crystal compound.

(30) Priority: **03.07.84 JP 137492/84**

(43) Date of publication of application:
**22.01.86 Bulletin 86/04**

(45) Publication of the grant of the patent:
**27.12.89 Bulletin 89/52**

(84) Designated Contracting States:
**CH DE GB LI**

(56) References cited:
**EP-A-0 110 299**
**US-A-4 173 544**

(73) Proprietor: **SEIKO INSTRUMENTS INC.**
**31-1, Kameido 6-chome Koto-ku**
**Tokyo 136 (JP)**
(73) Proprietor: **TEIKOKU CHEMICAL INDUSTRY CO., LTD.**
**1-18, 1-chome Kitahorie**
**Nishi-ku Osaka (JP)**

(72) Inventor: **Taguchi, Masaaki c/o Seiko Instruments and Electronics Ltd. 6-31-1, Kameido Koto-ku Tokyo (JP)**
Inventor: **Harada, Takamasa c/o Seiko Instruments and Electronics Ltd. 6-31-1, Kameido Koto-ku Tokyo (JP)**
Inventor: **Suenaga, Hitoshi c/o Teikoku Chemical 5-41, Senzo Itami-shi Hyogo (JP)**

(74) Representative: **Caro, William Egerton et al**
**J. MILLER & CO. Lincoln House**
**296-302 High Holborn**
**London WC1V 7JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 168 963 B1

**Description**

This invention relates to liquid crystal compounds particularly valuable although not exclusively, as electro-optical elements utlizing response of ferroelectric smectic liquid crystal compounds to electric fields.

Liquid crystal compounds have been utilised as electro-optical elements in various devices such as, for example, watches and electronic table calculators. Liquid crystal compounds currently in use are mainly nematic liquid crystal compounds or cholesteric liquid crystal compounds and, because of their dielectric anisotropy, the long molecular axis is aligned in a given direction by an applied electric field. However, in the case of a display device having many image elements, the response characteristics of such conventional liquid crystal elements are insufficient and, since no sufficient driving margin can be maintained, the contrast and viewing angle characteristics are inadequate. Accordingly, there has been much research into and development of MOS display panels and TFT display panels in which a switching element is formed for each image element.

A liquid crystal display element has been developed based on a new display principle using the smectic phase, in which the above-mentioned defects of conventional liquid crystal compounds are overcome. This liquid crystal element will now be briefly described.

Fig. 1 is a diagram illustrating the smectic C* or H phase of a liquid crystal compound. The liquid crystal compound comprises respective molecular layers 1, the average direction of the long axis of the molecules in these layers being inclined by an angle $\psi_0$ relative to a direction normal to the layers. In the thesis entitled "Ferroelectric Liquid Crystals" in Le Journal de Physique, Vol. 36 (March 1975, pages L—69 to L—71), Meyer et al teach that a smectic C* or H liquid crystal compound composed of optically active molecules generally has an electric dipole moment $\vec{P}$ and is ferroelectric. This dipole moment $\vec{P}$ is perpendicular to an inclination direction $\hat{n}$ of the molecules and is parallel to the layer face of the smectic phase. Although the same is applicable also to the smectic H phase, the visciousness to rotation about the axis normal to the molecular layers is large in H phase. The presence of an electric dipole moment in the chiral smectic phase gives rise to a much stronger coupling force to the electric field than dielectric anisotropy. Further, this coupling force has a polar characteristic in the sense that the preferred direction of the dipole moment $\vec{P}$ is a direction parallel to the electric field $\vec{E}$. Accordingly, if the direction of the applied electric field is inverted, the direction of the dipole moment $\vec{P}$ is inverted. Namely, by inversion of the electric field (the angle $2\psi_0$ will be referred to as the "cone angle" hereinafter), shown in Fig. 2 is such that the direction of the dipole moment $\vec{P}$ can be controlled by the movement of the molecules along the core. Accordingly, the liquid crystal compound can be utilised in an electro-optical element by detecting change of the molecules in the direction of the average long axis by means of two polarising plates.

In an electro-optical element utilising the response of the smectic C* or H phase of a liquid crystal compound to an electric field, the coupling force between the spontaneous polarisation and the electric field is of the order of $10^3$ to $10^4$ times larger than the coupling force due to dielectric anisotropy. Accordingly, the response speed of this electro-optical element is higher than that of a TN type liquid crystal element and, if appropriate orientation control is selected, a memory characteristic can be obtained. Therefore, it is expected that this electro-optical element can be applied to high-speed optical shutters or display devices for displaying a large quantity of informations.

Various chiral smectic liquid crystal compounds having this ferroelectric characteristic have heretofore been synthesised and investigated. The ferroelectric liquid crystal compound first synthesised was p-decyloxy-benzilidene-p'-amino.2-methylbutyl cynnamate generally called "DOBAMBC". Ferroelectric liquid crystal compounds represented by the following structural formula have been synthesised and investigated:

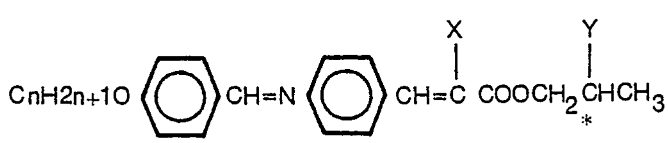

where X is H, Cl or CN, Y is Cl or $C_2H_5$, and the asterisk indicates as asymmetric carbon atom.

Since liquid crystal compounds of this type show a chiral smectic phase at a relatively high temperature exceeding room temperature, they have the disadvantage that they cannot be used at room temperature. Moreover, since the liquid crystal compounds are of the Schiff base type, they are readily decomposed in the presence of water and their stability is poor.

As an improved liquid crystal compound developed from the above, B.I. Ostrovskii et al. [Ferro-electrics, *24*, 309 (1980)] and A. Hallsby et al. [Mol. Cryst. Liq. Cryst., Letter 82, 61 (1982)] proposed a chiral smectic liquid crystal compound of the Schiff base type having a hydroxyl group introduced into one benzene ring and a hydrogen bond in the molecule, as represented by the following general formula:

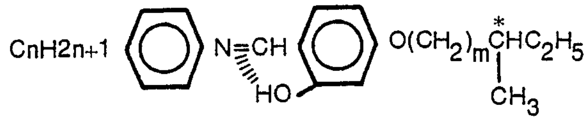

(1)

This compound has attracted attention as a compound showing the smectic C* phase over a broad temperature range including room temperature. Since this compound contains a hydrogen bond in the molecule, it is scarcely decomposed in the presence of water and has an excellent stability compared to liquid crystal compounds of the Schiff base type. However, this compound is not practical because non-crystalisation at temperatures lower than 0°C is required in practice.

An azoxy type liquid crystal material was reported by P. Keller et al. [Ann. Phys., 139 (1978)]. However, since its applicable temperature range is insufficient and this liquid crystal material is a dense yellow compound, it cannot be put into practical use.

Ester type liquid crystal compounds are noted for their stability among TN type liquid crystal materials. The above B.I. Ostrovskii et al reference reported that a compound represented by the following general formula:

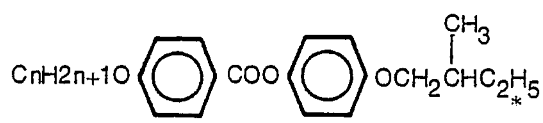

(n 9, 10)

shows a chiral smectic liquid crystal phase at temperatures relatively close to room temperature. Moreover, G.W. Gray et al. [Mol. Cryst. Liq. Cryst., *37*, 189 (1976) and *48*, 37 (1978)] reported a biphenyl ester type material showing a chiral smectic liquid crystal phase at relatively high temperature.

As is apparent from the foregoing discussion a liquid crystal compound that can be put into practical use and that shows a chiral smectic phase over a broad temperature range including room temperature has not yet been developed, and at the present, the range of temperature showing the Sc* phase can be broadened only by blending or admixing various liquid crystal compounds. The response characteristics of known liquid crystal compounds showing the Sc* phase has been measured and it is found that, among materials showing the Sc* phase at temperatures close to room temperature, a liquid crystal compound of formula (1) in which m is 1 and n is 8, that is, the so-called MBRA8, has the highest response speed of about 500 µsec. However, in order effectively to utilize high-response characteristics in ferroelectric liquid crystal display devices, it is necessary to develop a liquid crystal compound having an even higher response speed.

The present invention seeks to provide a novel liquid crystal compound showing a smectic C* phase at temperatures close to room temperature and high-speed response characteristics.

According to the present invention there is provided a liquid crystal compound represented by the general formula:

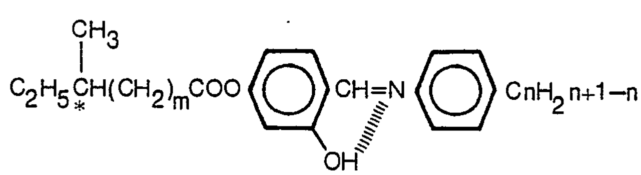

where, m is a number from 0 to 10, n is a number from 5 to 14, and the asterisk indicates an asymmetric carbon atom.

Preferably m is 0 or 1 and n is a number from 8 to 11.

The invention is illustrated, merely by way of example, in the accompanying drawings, in which:—

Fig. 1 is a model illustrating the smectic C* phase or H phase of a liquid crystal compound;

Fig. 2 is a model illustrating the movement of liquid crystal molecules of the chiral smectic phase of a liquid crystal compound under the action of an electric field;

Fig. 3 is a graph showing the temperature dependency of response speed; and

Fig. 4 is a phase of an admixture of two liquid crystal compounds.

A novel optically active liquid crystal compound represented by the following general formula:

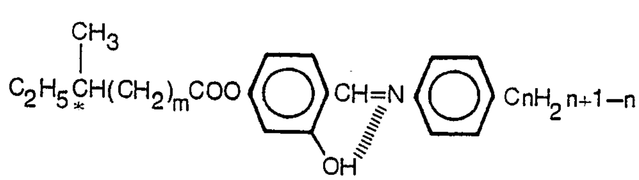

where, m is a number from 0 to 10, n is a number from 5 to 14, and the asterisk indicates an asymmetric carbon atom has been synthesised.

Most of the compounds represented by the above formula were found to show the Sc* phase at temperatures close to room temperature and have a relatively high response speed. From the results of experiments, it has been confirmed that liquid crystal compounds according to the present invention have a higher response speed than MBRA8 which has the highest response speed among known liquid crystal compounds showing the Sc* phase at temperatures close to room temperature.

The response speed τ is represented by the following formula:

$$\tau \,\alpha\, \eta / Ps.E$$

where, η stands for rotational viscosity, Ps stands for spondaneous polarisation, and E stands for the intensity of an applied electric field.

Liauid crystal compounds according to the present invention have a high speed response because the value of the spontaneous polarisation Ps is increased by substitution of —O— participating in the spontaneous polarisation Ps with

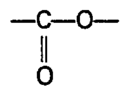

in the side chain.

Since liquid crystal compounds according to the present invention have a high-speed response characteristic, response characteristics of a liquid crystal composition can be enhanced if these liquid crystal compounds are admixed with other chiral smectic liquid crystal compounds.

An example of a process for the synthesis of a liquid crystal compound according to the present invention is represented by the following chemical equation:

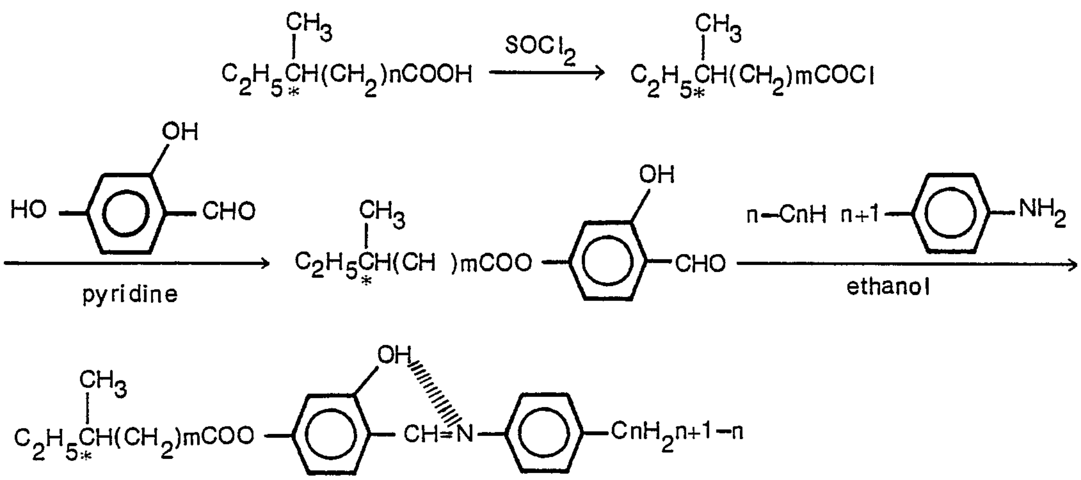


Furthermore, a liquid crystal compound according to the present invention can be prepared by reacting a compound represented by the following formula:

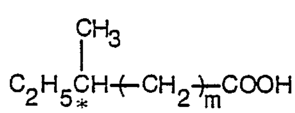

with

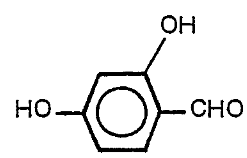

in the presence of a condensing agent (such as DCC) and reacting the compound so claimed of the following formula:

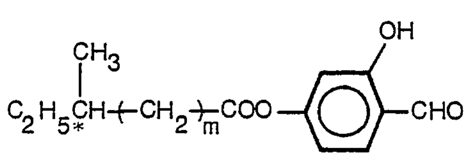

with

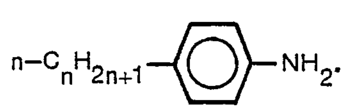

Example 1

The process for the synthesis of optically active 4-(3-methylpentylcarboxy)-2-hydroxybenzylidene-4'-octylaniline will now be described.

First Stage:

Synthesis of optically active 3-methylpentylcarboxy-2-hydroxybenzaldehyde.

To 5.7 g of optically active 3-methylvaleric acid synthesised from commercially available active amyl alcohol was added 30 ml of thionyl chloride, and the reaction was carried out under heat and reflux for three hours. Excess thionyl chloride was distilled to obtain oily 3-methylvaleroyl chloride.

b.p. 141~144°C

$\nu_{max}^{film}$ 1810 $cm^{-1}$

The acid chloride so obtained was dissolved in 6 ml of dry ether and the solution was added dropwise with cooling using ice to a mixture comprising 6.77 g of 2,4-dihydroxybenzaldehyde, 7.76 g of dry pyridine and 14 ml of dry ether. The temperature was then allowed to rise to room temperature and reaction was carried out under reflux for 5 hours. The reaction mixture was poured into iced water and extracted with ether. The organic layer was washed with 2N HCl, 5% NaOH, water and a saturated aqueous solution of sodium chloride and dried. Ether was removed by distillation and the obtained oily product was repeatedly refined to obtain 5.4 g of optically active 3-methylpentylcarboxy-2-hydroxybenzaldehyde.

$\nu_{max(cm^{-1})}^{film}$ 3080
2740
1765
1695

$\delta_{TMS(ppm)}^{CDCl_3}$ 11.37, S, 1H, —OH (D.O. exchangeable)
9.96, S, 1H, —CHO
6.80~8.03, m, 3H, Aromatic H
2.33~2.52, m, 2H $—CH_2—\overset{\overset{O}{\|}}{C}—$

Second Stage:

Synthesis of optically active 4-(3-methylpentylcarboxy)-2-hydroxybenzylidene-4'-octylaniline.

A 50-ml 3-neck flask was charged with 2.84 g of 4-(3-methylpentylcarboxy)-2-hydroxybenzaldehyde, 2.46 g of 4-n-octylaniline and 25 ml of dry ethanol, and the reaction was carried out under heat and reflux for 3 hours. After completion of reaction, the reaction mixture was cooled, and the precipitated crystals recovered by filtration. The crystals were repeatedly refined to obtain 3.46 g of optically active 4-(3-methylpentylcarboxy)-2-hdyroxybenzylidene-4'-octylaniline.

$\nu_{max(cm^{-1})}^{nujol}$ 1765, 1612, 1605

$\delta_{TMS(ppm)}^{CDCl_3}$ 13.77, broads, 1H —OH ($D_2O$ exchangeable)
8.6, S, 1H —CH=N—
6.67~7.93, m, 7H, Aromatic H
2.32~2.82, m, 4H, 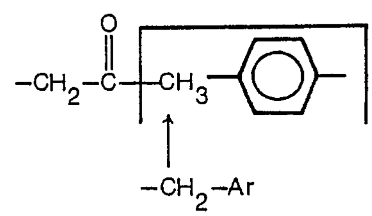

This liquid crystal compound (referred to as "LC—1") was found to show the following phase transition:

$$Cry \xrightarrow{48.8°C} Sc^* \xrightarrow{64.3°C} Ch \xrightarrow{69.4°C} Is_0$$
$$\xleftarrow[+]{}$$

The + indicates super-cooling.

This liquid crystal compound LC—1 was inserted between substrates monoaxially oriented by PVA rubbing, and the thickness of the liquid crystal layer was arranged to be 2.5 μm. The characteristics were determined under crossed nicols by applying a voltage of ±10V. The temperature at which measurement took place was 27°C.

Response speed: 320 μsec

Contrast (Ton/Toff): 7.8

Cone angle: 41.5°

Although the foregoing data were determined in a super-cooled state, it is seen that the liquid crystal compound LC—1 is characterised by a very high response speed.

The temperature dependency of the response speed of the liquid crystal compound LC—1 is shown in the graph of Fig. 3. By comparison data collected under the same conditions for the liquid crystal compound MBRA8 and a 3/1 admixture of MBRA8/LC—1 are shown in Fig. 3. A phase diagram of the admixture of the liquid crystal compounds LC—1 and MBRA8 is shown in Fig. 4.

From these data, it will readily be understood that the liquid crystal compound LC—1 has a higher response speed than the liquid crystal compound MBRA8, and the response characteristics of the liquid crystal compound MBRA8 can be improved if the liquid crystal compound LC—1 is admixed with the liquid crystal compound MBRA8. In a liquid crystal composition consisting of an admixture of the liquid crystal compound LC—1 and MBRA8, the temperture range showing the Sc* phase cannot be greatly broadened, but it has been confirmed that the liquid crystal compound LC—1 is a material effective in improving response characteristics.

Examples 2—7

Liquid crystal compounds according to the present invention and shown in the following Table were synthesised in a manner similar to that of Example 1. The phase transition temperature and the response speed of these liquid crystal compounds were measured, so that the following data was obtained. The response speed was measured in a manner similar to that of Example 1.

TABLE

| Example No. | m | n | Phase Transition Temperature (°C ) | Response Speed |
|---|---|---|---|---|
| 2 | 0 | 6 | Cry $\xrightarrow{39.1}$ Iso $\xrightarrow{36.6}$ $S_A$ $\xrightarrow{*}$ Cry | — |
| 3 | 0 | 8 | Cry $\underset{*}{\overset{34.0}{\rightleftarrows}}$ $S_C$* $\xrightarrow{43.0}$ Iso | 170<br>28 °C |
| 4 | 0 | 9 | Cry $\underset{*}{\overset{37.4}{\rightleftarrows}}$ $S_C$* $\xrightarrow{50.5}$ $S_A$ $\xrightarrow{52.5}$ Iso | 190<br>32 °C |
| 5 | 0 | 10 | Cry $\underset{*}{\overset{38.6}{\rightleftarrows}}$ $S_C$* $\xrightarrow{40.9}$ $S_A$ $\xrightarrow{49.5}$ Iso | 160<br>34 °C |
| 6 | 0 | 11 | Cry $\underset{*}{\overset{48.4}{\rightleftarrows}}$ $S_C$* $\xrightarrow{57.2}$ Iso | 200<br>55 °C |
| 7 | 1 | 11 | Cry $\xrightarrow{49.6}$ $S_C$* $\xrightarrow{71.6}$ $S_A$ $\xrightarrow{73.3}$ Iso; $S_C$* $\xrightarrow{*22}$ $S_X$ $\xrightarrow{*13}$ Cry | 400<br>55 °C |

As is apparent from the foregoing description, liquid crystal compounds according to the present invention show the Sc* phase and have a very high response speed. Accordingly, liquid crystal compounds according to the present invention are very effective as a liquid crystal material for a ferroelectric liquid crystal display element of a multi-divided moving image display panel or a high-speed optical shutter where high-speed response characteristics are required. Therefore, the present invention makes a great contribution to practical utilisation of ferroelectric smectic liquid crystal elements.

**Claims**

1. A liquid crystal compound represented by the general formula:

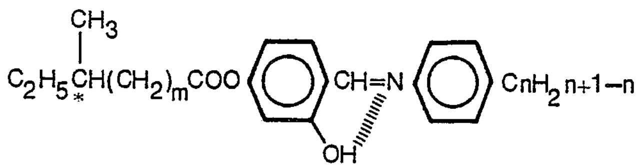

where, m is a number from 0 to 10, n is a number from 5 to 14, and the asterisk indicates an asymmetric carbon atom.

2. A liquid crystal compound as claimed in claim 1, wherein m is 0 or 1 and n is a number from 8 to 11.

**Patentansprüche**

1. Flüssigkristallverbindung, dargestellt durch die allgemeine Formel:

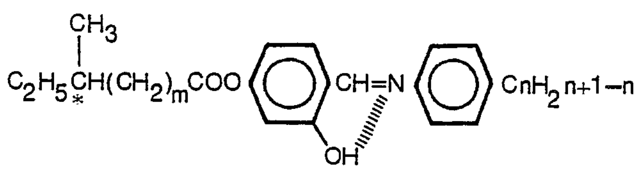

wobei m eine Zahl von 0 bis 10 ist, n eine Zahl von 5 bis 14 ist und der Stern auf ein asymmetrisches Kohlenstoffatom hinweist.

2. Flüssigkristallverbindung nach Anspruch 1, worin m 0 oder 1 ist und n eine Zahl von 8 bis 11 ist.

**Revendications**

1. Composé de cristal liquide représenté par la formule

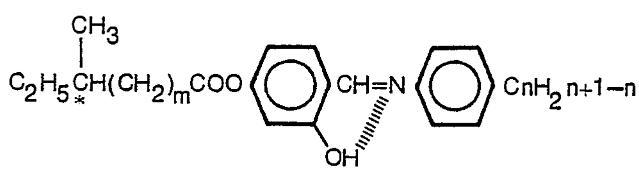

dans laquelle m est un nombre compris entre 0 et 10, n est un nombre compris entre 5 et 14, l'astérisque indiquant un atome de carbone asymétrique.

2. Composé de cristal liquide selon la revendication 1 dans lequel m vaut 0 ou 1, et n est un nombre compris entre 8 et 11.

Fig . 1.

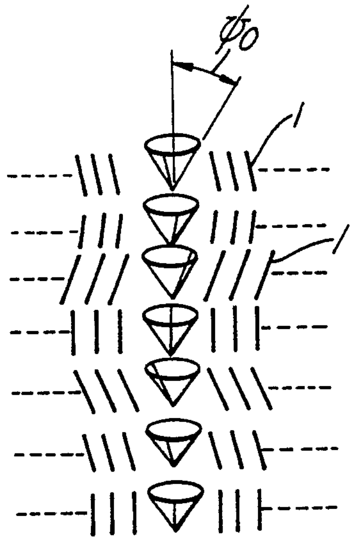


Fig. 2.

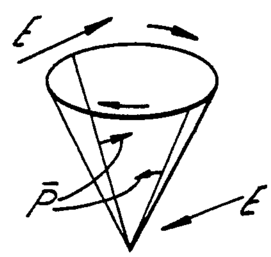

Fig. 3.

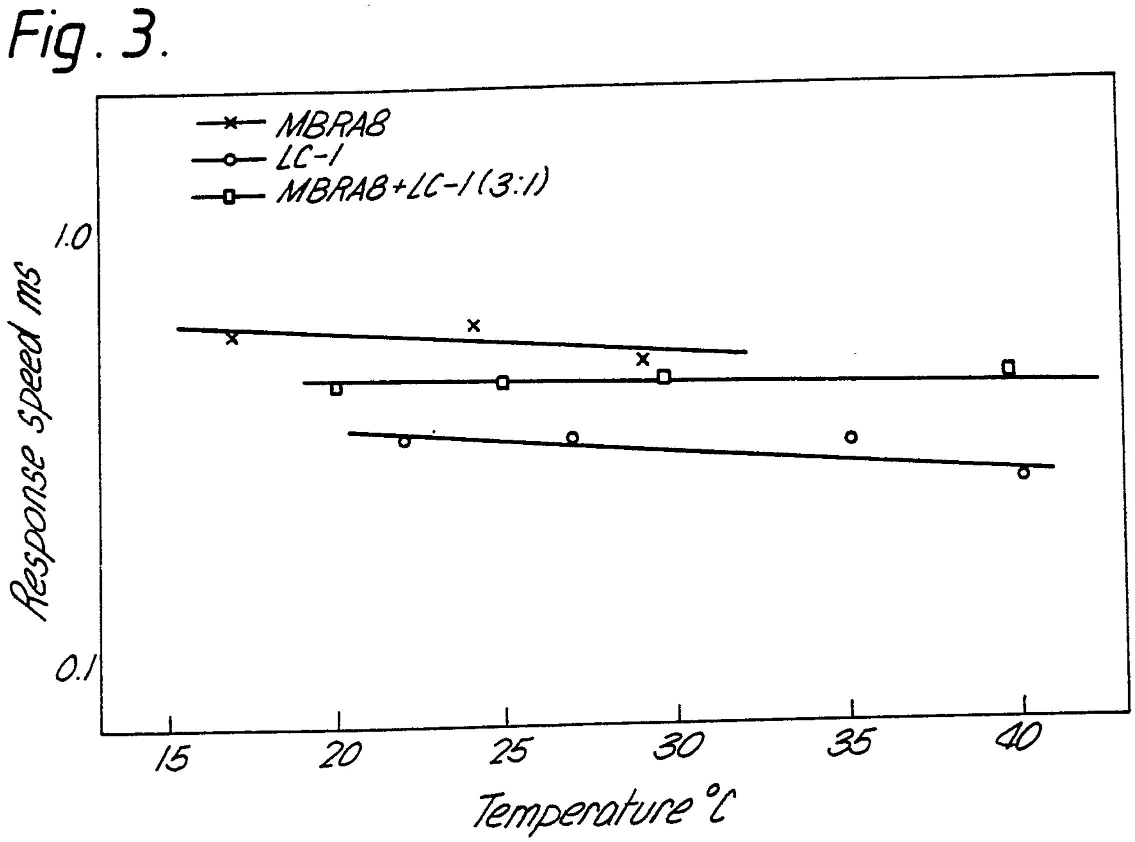
MBRA8
LC-1
MBRA8+LC-1 (3:1)
1.0
0.1
Response speed ms
15
20
25
30
35
40
Temperature °C

Fig. 4.

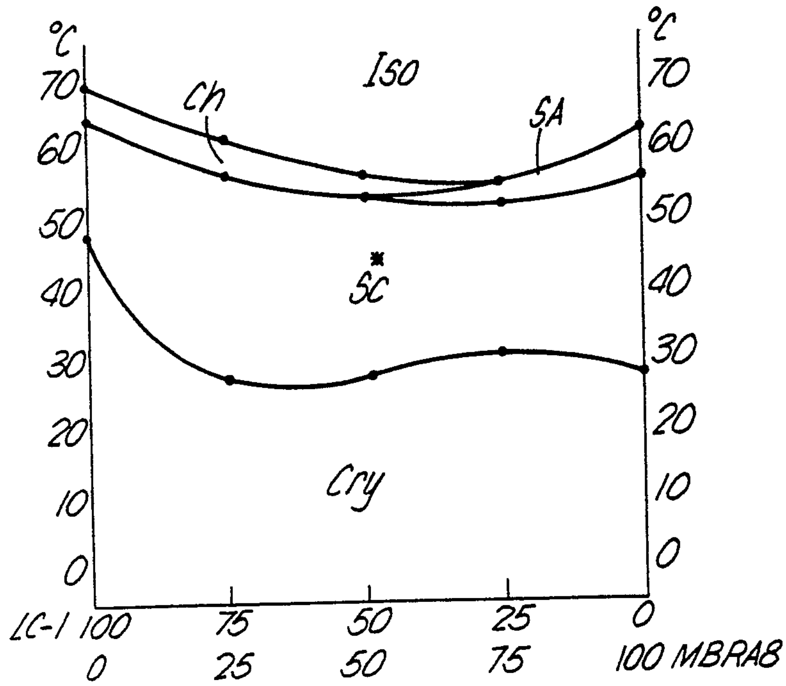
°C
70
60
50
40
30
20
10
0
Iso
Ch
SA
SC
Cry
LC-1 100
75
50
25
0
0
25
50
75
100 MBRA8